# EUROPEAN PATENT APPLICATION

(11) **EP 1 359 785 A1**
(43) Date of publication of application: **05.11.2003**
(21) Application number: 02710860.4
(22) Date of filing: 17.01.2002
(51) Int. Cl.: H04Q 9/00, H04Q 9/02

(54) **DEVICE FOR TELEMETRY AND/OR REMOTE CONTROL SYSTEMS**

(30) Priority: 17.01.2001 ES 200101789
(71) Applicant: Spin Off Tecnology, S.L., 28039 Madrid (ES)
(72) Inventor: SANCHEZ MEZQUITA, Gregorio, E-28004 Madrid (ES)
(74) Representative: Ungria Lopez, Javier
(86) International application number: ES0200021
(87) International publication number: WO02058427

(57) **Abstract**

The invention relates to a system comprising centralised control means (9) which are connected via a global network (8) to a local computer that handles and controls multiple data/control modules (7) in a local subsystem (10). The inventive devive (1) is provided with means of completely substituting said local computer, thereby removing the need for an operator in the subsystem (10). Said means functionally comprise a bridge block (3) which manages the performance of the sub-system (10), a modem (2) and interface (4).

## Description

### OBJECT OF THE INVENTION

The present invention, as disclosed in the title piece of this descriptive specification, relates to a device for remote metering and/or remote control systems, via fixed or cellular telephony, and the main object of which consists in making possible the centralisation of the management of multiple local units without the requirement for human intervention on site. It therefore concerns a communications device intended fundamentally for the transmission of data between machines.

The innovation with respect to earlier systems lies in that, by means of the system of the invention, comprising a remote data unit (RDU) inside the system, an equipment is achieved of reduced size, low power consumption, low cost, high autonomy, reliability, flexibility, as well as a communications model intended for variable parameters.

The device of the invention serves as a bridge between a local network of sensors and/or actuators and a global network. The utility of the system as a whole (in which the device of the invention is included) is facilitated both by the management software and by the sensors and/or actuators which are employed, numerous applications having been foreseen among which the following are worthy of mention: remote alarms, household control (domotics), remote metering of gas, water and electricity meters, video transmission, environmental data acquisition, remote opening/closing of valves, and management of dispensing machines.

### BACKGROUND OF THE INVENTION

Numerous systems are known for sensor and actuator data transmission between computers. The great drawback of systems already existing is that both ends of the pertinent communications channel consist in large or medium-sized computers which have to be managed by respective operatives and moreover have a high power consumption and are expensive.

By means of the device of the present invention the preceding communications scheme is improved since one of the ends of the communication is replaced by an apparatus of reduced size, low consumption and high autonomy, which reduces the total cost of this type of remote metering and/or remote control plant.

### DESCRIPTION OF THE INVENTION

To achieve the objectives and overcome the drawbacks outlined in the above paragraphs, the invention consists of a device for systems of remote metering and/or remote control, in which the system is provided with centralised control means which connect via fixed and/or cellular telephony with a global network such as internet, and via said global network and telephony with at least one local subsystem by means of a second computer or local computer pertaining to said subsystem and which governs a local network for the control of some data/control modules consisting functionally of sensors/actuators.

According to the invention, the aforementioned device, termed remote data unit (RDU), comprises means which permit the aforementioned second computer to be replaced completely, avoiding thereby the need for human intervention in the pertinent local subsystem; the aforementioned means consisting of the following functional blocks:
- A block termed bridge which serves for the conversion of global to local network communications protocols and vice versa, which manages the behaviour of the local subsystem and which administers the energy in this subsystem in the event of battery operation.
- A modem which interconnects the bridge block with the aforementioned telephony or telephone line.
- And an interface which serves for the physical conversion between the signals which the bridge block produces and the data/control signals required in the local network.

Thus it is made possible to read and/or modify variable parameters pertaining to the data/control modules directly from the centralised control means; the communications being variables-oriented, that is, the information transactions between the centralised control means and the data/control modules are carried out with the content of these variables.

In the local subsystem is defined the unique address of the data/control module as a byte; the unique direction of the variable as a byte.

The bridge block is provided with means of low-consumption operation and disconnected from the centralised control means in at least one case selected from:
- pre-established time intervals;
- on a date and at a time determined by a real-time clock which it incorporates;
- at the request of the centralised control means to which it is connected;
- by the occurrence of an exceptional situation detected by the modules of the local network.

In addition, from the functional point of view, the bridge block presents at least one mode of behaviour selected from:
interchange of GSM short messages specially indicated for notification of events;
request for information;
change of configuration of the data/control modules; the modem in this mode being of the GSM type;
point to point connection, specially indicated for the transmission of information in real time, the modem in this mode being of a type which permits connection by means of IP communications protocol.

In the point to point connection mode mentioned, it is accepted that the communications include encryption means with keys of up to 1024 bits in order to maintain data privacy in the global network. The means of encryption also permit keys of more than 1024 bits.

The bridge block is provided with
a first unique address within the global network to which it is connected in order not to be confused with another bridge block of another subsystem;
an internal second address in order to be distinguished from other devices.

As first unique address it is accepted to have,
a telephone number in the event of GSM-SMS communications protocols;
an IP address in the event of TCP/IP communications protocols.

The bridge block, in its connection with the centralised control means, employs at least one communications protocol selected from:
SMS for GSM connections in short message interchange mode;
IP for point to point connections via a telephone line.

The IP communications protocol for point to point via a telephone line between the bridge block and the centralised control means, is selected from PPP, TCP/IP, UDP/IP, POP3, SMTP.

The modem is of a type suitable for IP communications protocols. It is accepted that the modem be of at least one type selected from GSM, GPRS, UMTS, RTB, ISDN, according to a communications mode chosen by a user.

The communications between the device, termed remote data unit (RDU) and the data/control modules via the local network employ communications protocols appropriate for setting up communications in local networks.

The communications between the device, termed remote data unit (RDU) and the data/control modules via the local network employ communications protocols of at least one type selected from ModBus (RS485), RS232, CEBus, X10 and combinations of the same; it being possible to implement the physical form of the corresponding buses of said local network by means of cable and by radio frequency.

Each of the variables of the data/control modules has associated therewith a unique address which together with the address which the corresponding module has, permits said variable parameters to be univocally identified within the serial bus whereby the local network is implemented, so that the access, identification, interpretation and/or modification of said variables on the part of the centralised control means is perfectly defined.

The aforementioned local subsystem has from the logical point of view a structure in tree-form of at least three levels: remote data unit (RDU), modules and variables, according to how it is seen by the centralised control means in order to permit addition in a simple manner of
new local subsystems;
more data/control modules.

The device of the invention as disclosed offers the following principal benefits:
- The functionality of the entire system in which the device is incorporated can be defined in the pertinent centralised control means, so that when the sensor and/or actuator modules which are required for a specific application are connected the entire system is programmable from said centralised control means and from this alone; it being possible to perform the tracking of as many subsystems as desired.
- The device of the invention could be worked from a battery and from a solar panel, whereby it would be fully autonomous.
- All the communications carried out between any of the RDUs of the different subsystems and the centralised control means can be encrypted, whereby no one will be able to discover this information or alter the behaviour of the units or data/control modules.
- The management software adapted to a specific application can be developed in its entirety in the centralised control means.
- It permits the addition of new remote systems or the addition of more modules to those present to be achieved in a simple manner due to the structure in tree form which can be implemented.

Below, to facilitate a better understanding of this descriptive specification and forming an integral part thereof, drawings are attached wherein by way of illustration and not restrictively the object of the invention has been represented.

### BRIEF DESCRIPTION OF THE DRAWINGS

**Figure 1** shows a functional block diagram of a device for systems of remote metering and remote control implemented according to the present invention, being represented also the local subsystem in which the device mentioned is incorporated.
**Figure 2** shows a functional block diagram of a system of remote metering and remote control in which is incorporated the device mentioned in the preceding figure 1.

### DESCRIPTION OF A PREFERRED EMBODIMENT OF THE INVENTION

A description is made below of an embodiment of the invention, making reference to the numbering adopted in the figures.

Thus, the device 1 of the present embodiment is incorporated in at least one local subsystem 10 for the purpose of replacing a local computer which governs some data/control modules 7 consisting in sensors and/or actuators; so that in the subsystem 10, human intervention is not required, which is essential when employing the local computer mentioned.

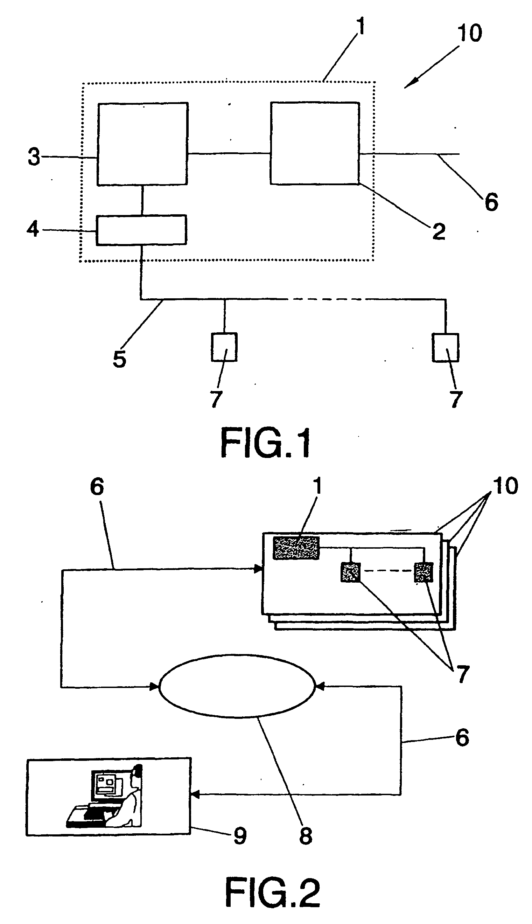

The system in which the device 1 is incorporated is shown in figure 2, and consists of centralised control means 9 which via fixed or mobile telephony 6 has access to the global network 8, internet in the present embodiment, in order to connect with one or more local subsystems 10.

The device 1, termed remote data unit (RDU) is connected to a fixed or mobile telephone net 6 and to a local network 5 within the corresponding local subsystem 10, so that via the local network 5 access is obtained to the data/control modules 7 of said subsystem 10.

According to that shown in figure 1, the device 1 has three functional blocks consisting of a block termed bridge 3, a modem 2 and an interface 4. The modem 2 constitutes the first connecting means for connecting with a global network 8, whilst the interface 4 constitutes the second connecting means for connecting with a local network 5.

The bridge block 3 has:
- converting means for converting communication protocols of the global network 8 to communication protocols of the local network 5, and vice versa;
- managing means for managing the behaviour of the local subsystem 10;

The bridge block 3 and the data/control modules 7 contain a plurality of variables
- capable of being configuration parameters;
- stored in storage means;
- each variable being defined, within each data/control module 7 by:
   a first unique address of the bridge block 3;
   a unique address of the data/control module 7;
   a unique address of the variable;

The device 1 has means for defining in the local subsystem 10
- the unique address of the data/control module 7 as a byte;
- the unique address of the variable as a byte.

The modem 2 is the element which interconnects the bridge block 3 with the mentioned telephony net or telephone line 6; whilst the interface 4 is the element which serves for the physical conversion between the signals which the bridge block 3 produces and the data/control signals required in the local network 5.

The communications are variables-oriented for transmitting information between the centralised control means 9 and the data/control modules 7, reading, modifying, reading and modifying, the content of said variables to permit that, directly from the centralised control means 9, variables corresponding to the data/control modules 7 are read, modified, read and modified.

With this configuration it is enabled that directly from the centralised control means 9 it is possible to perform the reading and/or modification of variable parameters corresponding to the data/control modules 7.

The local network 5 admits logical and physical communications protocols of various standards, whilst to the global network 8 access is had by means of fixed or mobile telephony 6 according to the TCP/IP or SMS protocols; a channel being set up in both cases connecting the local network 5 and the global network 8 which enables the management of the remote units or data/control modules 7 according to a widely extended protocol.

In the local subsystem 10 are defined
- the unique address of the data/control module 7 as a byte;
- the unique address of the variable as a byte.

The bridge block 3 is provided with means for working in low consumption mode and disconnected from the centralised control means 9 in order to implement connections to the centralised control means 9 in at least one case selected from:
- pre-established time intervals;
- on a date and at a time determined by a real-time clock which it incorporates;
- at the request of the centralised control means 9 to which it is connected;
- by the occurrence of an exceptional situation detected by the modules 7 of the local network 5.

From the functional point of view, the bridge block 3 presents at least one mode of behaviour selected from:
interchange of GSM short messages for
notification of events;
request for information;
change of configuration of the data/control modules 7;
the modem 2 being of the GSM type in this mode;
point to point connection for the transmission of information in real time, the modem 2 in this mode being of a type which permits connection by means of IP communications protocol.

In the point to point connection mode mentioned, it is accepted that the communications include encryption means with keys of up to 1024 bits in order to maintain data privacy in the global network 8. The means of encryption also accepts keys of more than 1024 bits.

The bridge block 3, in its connection with the centralised control means 9, employs at least one communications protocol selected from:
SMS for GSM connections in short message interchange mode;
IP for point to point connections via a telephone line 6.

The IP communications protocol for point to point via a telephone line 6 between the bridge block 3 and the centralised control means 9, is selected from PPP, TCP/IP, UDP/IP, POP3, SMTP.

The bridge block 3 is provided with
a first unique address within the global network 8 to which it is connected in order not to be confused with another bridge block 3 of another subsystem 10;
an internal second address in order to be distinguished from other devices 1.
as first unique address it is permitted to have,
a telephone number in the event of GSM-SMS communications protocols;
an IP address in the event of TCP/IP communications protocols.

The modem 2 is of a type suitable for IP communications protocols. It is accepted that the modem 2 be of at least one type selected from GSM, GPRS, UMTS, RTB, ISDN, according to a communications mode chosen by a user.

The communications between the device 1, termed remote data unit (RDU) and the data/control modules 7 via the local network 5 employ communications protocols appropriate for setting up communications in local networks.

The communications between the device 1, termed remote data unit (RDU) and the data/control modules 7 via the local network 5 employ communications protocols of at least one type selected from ModBus (RS485), RS232, CEBus, X10 and combinations of the same.

The physical form of the corresponding buses of said local network is implemented by means of cable and by radio frequency.

A brief explanation of the aforementioned protocols is given below:
- ModBus. This is an industrial standard for the wiring of acquisition and control modules implemented mainly by means of RS485.
- RS232. This is a standard for point to point connection. Optionally it will be used in device 1 for the connection of interfaces to local area networks of other manufacturers.
- CEBus. This is a standard for the implementation of local buses in domotics.
- X10. This is a standard for the implementation of local buses in domotics

The data/control modules 7 are sensors or actuators, or a combination of the two. The sensors acquire information and the actuators transmit commands to the environment. From a general point of view, the modules 7 contain variables which are elemental units of information which are capable of being read or written and which represent configuration parameters or physical variables. Each of these variables has associated therewith an address which together with the address which the module to which they belong has, identify them univocally within the data and/or control bus. In this manner the communications between the centralised control means 9 and the modules 7 are implemented through the associated variables, and the access to these is perfectly defined insofar as the bridge block 3 has a unique access identifier within the global network 8. In some cases it will be its telephone number (GSM-SMS) and in others its IP address (internet). The interpretation of the variables is carried out in the centralised control means 9 on which responsibility rests for all local processing.

The sensors constituting modules 7 can be gas detectors, intruder detectors, detectors of gas, electricity and water flow, video, global positioning system (GPS), temperature, sound, etc., whilst the actuators also constituting modules 7, can be devices for opening and closing valves, switching household appliances on and off, motor control gear, etc.

The end functionality of the complete system in which the device of the invention is integrated, will depend on the sensors or actuators 7 which are hooked into the local network 5 to which the device 1 grants access. It will therefore be these modules 7 which provide the utility in a given application.

The RDU or device 1 is, from this point of view, a generic and flexible element in which the only item to be defined is what type of sensors and/or actuators 7 are necessary for a specific application, developing the pertinent software in the centralised control means 9. Thus, adding a new functionality to a defined application or modifying it completely will be a straightforward task from the logic point of view.

As it is possible to apply the device 1 of this invention to a generic system of data communication between machines, the possible applications are innumerable, depending on the data and control modules 7 in the local network 5. Nevertheless, those which result most to hand are the following:
- Remote alarms
- Household control (domotics)
- Remote metering of gas, water and electricity meters
- Video transmission
- Acquisition of environmental data
- Remote opening and closing of valves
- Managing dispensing machines.

In one of the possible applications, such as the acquisition of environmental data, a device 1 can be connected, for example, to a series of ten gas concentration sensors involved in environmental pollution (NO₂, CO₂, CO, etc.) for the purpose of being able to know the pollution level present in the environment wherein the measuring system is located. The device 1 is configured to work in the GSM mobile telephony network and with internet protocol. In this way a management station for multiple measuring systems could know at all times the pollution levels in a determined area. The measuring systems could also be left to work autonomously and only when a certain concentration threshold of one of the gases were surpassed would the connection be made to the station to warn of this situation, and the latter could proceed to track the new situation or take decisions concerning the same.

Certain constructional details of the device 1 of the present embodiment are provided below:

So, the device 1 will be incorporated in a housing or casing with the pertinent connectors, the main component being a microprocessor with internal program memory and external data memory. To store the configuration parameters of the assembly, a serial EEPROM memory is used which among other things will hold: a personal key for carrying out encrypted communications (up to 128 bytes), the size used of said key, a unique identifier of the device 1 (6 bytes), the PIN (personal identification number) in the case of GSM communications, the internet services provider (ISP), the name of the user and password within the ISP, IP addresses and ports where the control centre is housed, alternative control ports and addresses in the event of the previous one failing, date and time for programmed connection to the server or in the case of GSM-SMS, date and time of information dumping, time in seconds between periodic connections or dumping of information in the case of GSM-SMS, events produced in the corresponding local bus during periods of disconnection, number of attempts permitted for connection with the ISP, as well as number of attempts permitted for connection with the control centre, number of modules connected to the local bus and addresses associated therewith, power saving modes, mode of connection to the control centre (server or TCP/IP client), etc. The greater part of the parameters mentioned are configured from the centralised control means 9, and the remaining parameters are of internal use. The presence or not of each of the parameters will depend on the final model implemented, which will be a function of the type of access to the global network 8 if the communications are PPP-PCP/IP or GSM-SMS and on the type of local network 5 implemented.

The device 1 includes a real time clock for programming purposes, calculating times between connections, and alerting of scheduled dates. The power supply for the aforementioned device 1 could be implemented with batteries or solar panels, so that it could have long periods of autonomous operation.

Furthermore, the device 1 of the present embodiment includes a switch for manual connection with the centralised control means 9, it being possible for this switch to have other functions according to the state in which the device is at the time. For example, if the switch is maintained depressed at the time of connecting to the supply, it will be an indication that it is wished to configure the system through a computer connected directly to the device. In this event, and only in TCP/IP mode, the device will act as a PPP server, permitting a computer connected via modem or cable and with the appropriate program to be connected directly to the device 1 in order to configure it. This is particularly indicated in the initial configuration of the device 1 and in the case of loss of configuration for whatever reason. Light-emitting indicators have also been foreseen on the device 1 which advise the user of the internal status of the device.

To manage the communications with the sensors or actuators 7 it is necessary to implement a physical and logical protocol which will be handled by a block pertaining to the device 1 and which is connected to the microprocessor mentioned previously. As various protocols are foreseen, this block can vary according to the version. The pertinent logic protocol will depend on the standard chosen and the information to which access is had must always be likewise presented to the microprocessor in question.

Furthermore, both the modem 2 and the interface 4 can be incorporated in the same casing as the rest of the device 1 or established in independent elements connectable to said rest of the device 1.

## Claims

1. A communications device for a system of remote metering, remote control and combinations thereof, in which the system comprises
centralised control means (9) which connect with a global network (8) and via said global network (8) with at least
one local subsystem (10);
said device (1) **characterised in that**
- it works as a remote data unit (RDU) included in the local subsystem (10), to permit the centralised control means (9) to govern a local network (5) and so control a plurality of data/ control modules (7) which work as sensors/ actuators, said device (1) comprising
first connecting means for connecting with a global network (8);
second connecting means for connecting with a local network (5) ;
a bridge block (3) which comprises
converting means for converting communications protocols of the global network (8) to communications protocols of the local network (5) and vice versa;
managing means for managing the behaviour of the local subsystem (10);
- the bridge block (3) and the data/control means (7) contain a plurality of variables
capable of being configuration parameters,
stored in storage means;
each variable being defined, within each data/control module (7) by:
a first unique address of the bridge block (3);
a unique address of the data/control module (7);
a unique address of the variable;
- the communications are variable-oriented to transmit information between the centralised control means (9) and the data/control modules (7), reading, modifying, reading and modifying, the content of said variables to permit that, directly from the centralised control means (9), variables corresponding to the data/control modules (7) be read, modified, read and modified.

2. A device according to claim 1, **characterised in that** the first connecting means are constituted by a modem (2) for interconnecting the bridge block (3) with the global network (8).

3. A device according to claim 1, characterised that the second connecting means are constituted by an interface (4) which comprises means for carrying out a physical conversion between signals produced by the bridge block (3) and the data/control signals required in the local network (5).

4. A device according to claim 1, **characterised in that** the device (1) has means for defining in the local subsystem (10)
the unique address of the data/control module (7) as a byte;
the unique direction of the variable as a byte.

5. A device according to claim 1, **characterised in that** the bridge block (3) also comprises managing means for managing the power in the local subsystem (10) in the event of autonomous operation.

6. A device according to claim 1, **characterised in that** the bridge block (3) also comprises means of operation in low consumption mode and disconnected from the centralised control means (9) for making connections to the centralised control means (9) in at least one case selected from:
pre-established time intervals;
on a date and at a time determined by an included real-time clock;
at request of the centralised control means (9) to which it is connected;
by the occurrence of an exceptional situation detected by the data/control modules (7) of the local network (5).

7. A device according to claim 1, **characterised in that** the bridge block (3) has at least one mode of behaviour selected from:
interchange of GSM short messages for
notification of events;
request for information;
change of configuration of the data/control modules (7);
the modem (2) in this mode being of the GSM type; point to point connection, for transmission of information in real time, the modem (2) in this mode being of a type which permits connection by means of IP communications protocol.

8. A device according to claim 7, **characterised in that** in the point to point connection mode, the communications are permitted to include encryption means with keys of up to 1024 bits to maintain data privacy in the global network (8).

9. A device according to claim 7, **characterised in that** in the point to point connection mode, the communications are permitted to include encryption means with keys of at least 1024 bits to maintain data privacy in the global network (8).

10. A device according to claim 1, **characterised in that** the bridge block (3) is provided with
a first unique address within the global network (8) to which it is connected to avoid being confused with another bridge block (3) of another subsystem (10);
an internal second address to be distinguished from other devices (1).

11. A device according to claim 10, **characterised in that** as first unique address,
a telephone number in the event of GSM-SMS communications protocols;
an IP address in the event of TCP/IP communications protocols;
is accepted.

12. A device according to claim 1, **characterised in that** in the bridge block (3), in its connection with the centralised control means (9), at least one communications protocol selected from:
SMS for GSM connections in short message interchange mode;
IP for point to point connections via a telephone line (6);
Is employed.

13. A device according to claim 12, **characterised in that** the IP communications protocol for point to point via a telephone line (6) between the bridge block (3) and the centralised control means (9), is selected from PPP, TCP/IP, UDP/IP, POP3, SMTP.

14. A device according to claim 1, **characterised in that** the first connecting means are of a type suitable for IP communications protocols.

15. A device according to claim 1, **characterised in that** the first connecting means are allowed to be of at least one type selected from GSM, GPRS, UMTS, RTB, ISDN, according to a communications mode chosen by a user.

16. A device according to claim 1, **characterised in that** the communications between the device (1) and the data/control modules (7) via the local network (5) employ communications protocols appropriate for setting up communications in local networks.

17. A device according to claim 1, **characterised in that** the communications between the device (1) and the data/control modules (7) via the local network (5) employ communications protocols of at least one type selected from ModBus (RS485), RS232, CEBus, X10 and combinations thereof.

18. A device according to claim 1, **characterised in that** a physical implementation of buses corresponding to the local network (5) is enabled to be done by means of cable, radio frequency and combinations thereof.

19. A device according to claim 1, **characterised in that** each one of the variables of the data/control modules (7) is associated to a unique address, which together with the address which its corresponding module (7), permits said parameters to be univocally identified within a bus whereby the local network (5) is implemented, so that an action on said variables by the centralised control means (9) selected from at least access, identification, interpretation, modification and combinations thereof is perfectly defined.

20. A device according to claim 1, **characterised in that** the remote data unit (RDU) constitutes a first level of a structure in tree form having at least three levels showing the local subsystem (10) from a logic point of view, the following levels being the data/control modules (7) and the variables, said structure being the form in which the local subsystem (10) is seen by the centralised control means (9), said structure permitting to add in a simple and modular manner of
more local subsystems (10);
more data/control modules (7).

## Amended claims

### Amended claims under Art. 19.1 PCT

**1.** A communications device for a system of remote metering, remote control and combinations thereof, in which the system comprises
centralised control means (9) which connect with a global network (8) and via said global network (8) with at least
one local subsystem (10);
said device (1) **characterised in that**
- it works as a remote data unit (RDU) included in the local subsystem (10), to permit the centralised control means (9) to govern a local network (5) and so control a plurality of data/control modules (7) which work as sensors/actuators, said device (1) comprising
first connecting means for connecting with a global network (8);
second connecting means for connecting with a local network (5) ;
a bridge block (3) comprising
converting means for converting communications protocols of the global network (8) to communications protocols of the local network (5) and vice versa;
managing means for managing the behaviour of the local subsystem (10) ;
- the bridge block (3) and the data/control means (7) contain a plurality of variables
capable of being
configuration parameters,
representations of real physical variables;
stored in storage means;
each variable being defined, within each data/control module (7) by
a first unique address of the bridge block (3);
a unique address of the data/control module (7);
a unique address of the variable;
- the communications are variables-oriented in order to transmit information between the centralised control means (9) and the data control modules (7), reading, modifying, reading and modifying, the content of said variables to permit that, directly from the centralised control means (9), variables corresponding to the data/control modules (7) be read, modified, read and modified.
